# EUROPEAN PATENT APPLICATION

(11) **EP 0 931 578 A1**
(43) Date of publication of application: **28.07.1999**
(21) Application number: 97870206.6
(22) Date of filing: 24.12.1997
(51) Int. Cl.: B01D 29/11, A23J 1/00

(54) **Method and apparatus for controlling the continuous filtration of liquids out of solid material from a substance to be thickened**

(71) Applicant: G. van Wijnsberghe en Co. NV, B-8630 Veurne (BE)
(72) Inventor: Vanhaecke, Hubert, 8630 Veurne (BE); Decock, Jan, 2450 Meerhout (BE)
(74) Representative: Bird, William Edward

(57) **Abstract**

A method is described for the continuous in-line expansion of a heterogeneous substance including a fluid and a solid fraction, comprising the steps of:
inputting the substance under pressure into a filtration cage (243),
releasing the liquid fraction which is filtered through the cage (243),
releasing the solid fraction from the cage (243),
controlling the pressures of the liquid fraction and the solid fraction so that the pressure at which the liquid fraction is released is lower than the pressure at which the solid fraction is released.

A combined expansion, pressure regulation and filtration apparatus for continuous in-line expansion of a heterogeneous substance including a fluid and a solid fraction is described. The apparatus preferably includes a filtration cage (243) for filtering said fluid from said solid fraction, means for pressurising the substance within said filtration cage (243), a housing (255) which encompasses said filtration cage (243) for receiving said liquid fraction and for outputting said liquid fraction, first pressure controlling means (258) for controlling the pressure at which said liquid fraction is output from said housing, and second pressure controlling means (259) for controlling the pressure at which the solid fraction leaves the cage (243).

## Description

The invention relates to a method and apparatus for the continuous in-line expansion of a heterogeneous substance including a fluid and a solid fraction. The invention also includes a pressure stabilised sterilisation unit. The invention may also relate to a method and a series of devices grouped in an extremely compact and simple system for the end-of-pipe continuous processing of natural wastes, e.g. rendering by-products from slaughtering and/or offal of animal origin, e.g. offal and carcasses, or vegetable wastes. The technology is primarily meant for use in or alongside slaughterhouses, meat preparation and meat processing factories and everywhere where the by-products and waste products are directly processed into stabilised and sterilised saleable end products, i.e. animal fat and cake.

### Technical Background

In rendering processes the upstream and downstream pressures of the system must be kept stable and the predetermined process pressures accurately regulated. Previously known continuous in-line systems with relatively low flow rates of the main medium cannot efficiently and accurately achieve an expansion from a high to a low pressure without using expensive and complicated mechanical devices for controlling the media flow during this expansion.

For normal liquid, homogeneous media static adjustable throttle valves or rotating vane valves can be used. For troublesome media, which can be heterogeneous, paste-like and/or viscous, these expansion systems have two major drawbacks.

Firstly, the flow rate through a baffled tube, such as is the case with a static adjustable throttle valve, is difficult to control. In the case of the more liquid fractions, the resistance across the throttle valve is low and hence, the flow rate increases, so that with a relatively constant downstream pressure the upstream pressure decreases too rapidly and the required system minimum pressure can be lost. With a rotating valve, if the necessary gaps and seals between rotor and stator are not good enough or the rotor is porous, a practically continuous uncontrolled liquid leak occurs, again resulting in a pressure drop and loss of system pressure.

Secondly, clogging of solid materials can occur easily in systems with an adjustable throttle valve as well with a rotating valve as in both cases there is a considerable change in the shape and the size of the passage across the controlling device and/or because foreign objects can get stuck in the gaps of both systems thus blocking the expander.

In many cases the conventional rather slowly moving throttle valves like, for example, ball valves or slide valves, cause problems when used in combination with electrical, electronic, hydraulic and/or pneumatic regulators and/or valve position counters since these systems on the one hand generate an uncontrolled pressure drop because of too long delays when closing and, on the other hand they cannot sufficiently anticipate and deal with system clogging due to solid parts, especially in a thickened solid (paste) phase.

It is an object of the present invention to provide a method and an apparatus for continuous in-line expansion of a heterogeneous substance including a fluid and a solid fraction in which the problems with separation of the fluid and solid fractions is reduced.

It is a further object of the present invention to provide a compact multi-function expansion device suitable for use in rendering systems.

### SUMMARY OF THE INVENTION

The present invention provides a method for the continuous in-line expansion of a heterogeneous substance including a fluid and a solid fraction, comprising the steps of:
inputting the substance under pressure into a filtration cage,
releasing the liquid fraction which is filtered through the cage,
releasing the solid fraction from the cage,
controlling the pressures of the liquid fraction and the solid fraction so that the pressure at which the liquid fraction is released is lower than the pressure at which the solid fraction is released.

The present invention also relates to combined expansion, pressure regulation and filtration apparatus for the filtration of a first phase of a heterogeneous substance from a second more solid phase.

The present invention also includes an apparatus for continuous in-line expansion of a heterogeneous substance including a fluid and a solid fraction comprising
a filtration cage for filtering said fluid from said solid fraction,
means for pressurising the substance within said filtration cage,
a housing which encompasses said filtration cage for receiving said liquid fraction and for outputting said liquid fraction, and
means to allow the thickened solid fraction to leave the filtration cage, further comprising first pressure controlling means for controlling the pressure at which said liquid fraction is output from said housing, and
second pressure controlling means for controlling the pressure at which the solid fraction leaves the cage.

The present invention provides an apparatus for the continuous in-line sterilisation of a heterogeneous substance including a fluid and a solid fraction, comprising:
a holding tube;
a means for pressurising said holding tube with said heterogeneous substance;
said holding tube being terminated by a combined expansion, pressure regulation and
filtration apparatus for the filtration of a first liquid fraction of said heterogeneous substance from a second more solid phase.

The exit and entry tubes to the apparatus may have practically the same diameter as the filtration cage so that a clog-free passage of the solid fraction through the filtration apparatus is achieved. For maintaining uniform operation of the filtration and expansion, the expansion takes place on two separate fractions. The opening operating pressure of valves governing the liquid extraction is set at a slightly lower pressure than the opening operating pressure of the valve controlling release of the thickened solid fraction from the expander 24.

The present invention also includes a sterilisation unit for continuous in-line sterilisation of a heterogeneous substance including a fluid and a solid fraction comprising:
a means for raising the pressure within the unit,
means for heating the substance, and
said unit is terminated by a combined expansion, pressure regulation and filtration apparatus.

One advantage of the present invention may be the reduction in calorific power used in a rendering system by separating water in a physical way, i.e. through filtration followed by sedimentation, instead of evaporating it. This separation occurs in the expander where the expansion takes places in two separate phases, i.e. a liquid phase and a solid phase. The phases undergo a separation in an in-line screen basket. The filtration by means of this screen basket is improved because during heating in the steam heater and during the subsequent sterilisation process, certain proteins, in particular and primarily blood proteins, coagulate thermally, resulting in filterable water.

The dependent claims define further embodiments of the present invention. The present invention, its embodiments and advantages will now be described with reference to the following drawings.

### BRIEF DESCRIPTION OF THE DRAWINGS

Fig. 1 is a schematic flow diagram of a rendering process in accordance with the present invention.
Fig. 2 is a schematic diagram of the units of a rendering system in accordance with the present invention.
Fig. 3 is a schematic representation of a receiving vessel, crusher, feed screw and feeding pump in accordance with the present invention.
Fig. 4 is a schematic cross-sectional representation of the receiving vessel, crusher and feed screw of Fig. 3.
Figs. 5 and 6 are schematic cross-sectional representations of a feeding mechanism in accordance with the present invention.
Figs. 7A and Fig. 7B are schematic representations of a steam heater in accordance with the present invention.
Figs. 8 and 9 are schematic representations of an expander in accordance with the present invention.
Fig. 10 is a schematic representation of a drier in accordance with the present invention.
Figs. 11 and 12 are schematic representations of further embodiments of the drier in accordance with the present invention.
Figs. 13 and 14 are schematic representations of a defatting press in accordance with the present invention.
Figs. 15 to 17 are schematic cross-sectional representations of the processing unit of a compact rendering system in accordance with the present invention.
Figs. 18A and B are schematic representations of a compact rendering system in accordance with the present invention.

### DESCRIPTION OF THE PREFERRED EMBODIMENTS

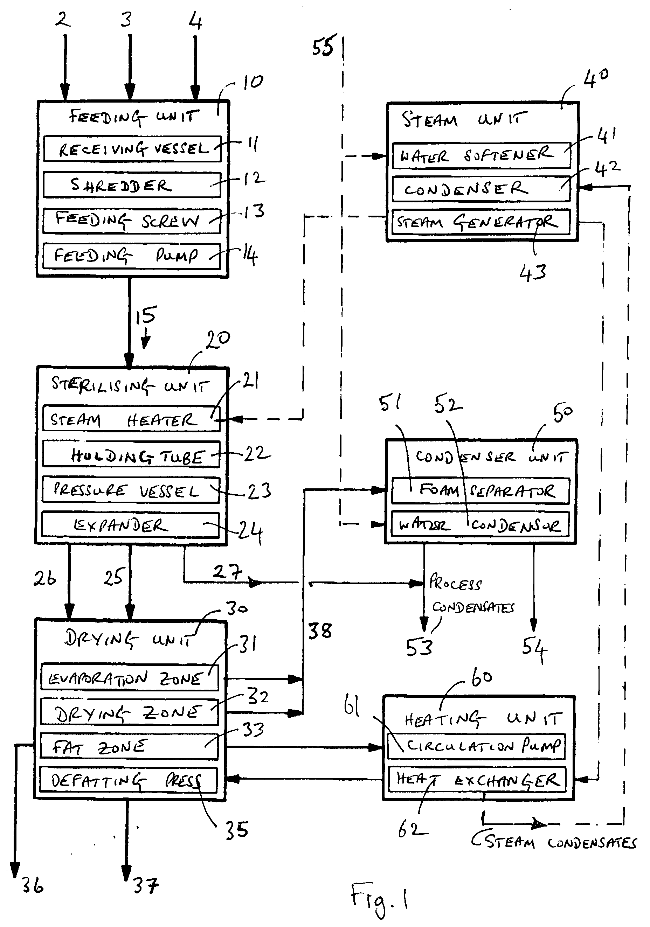

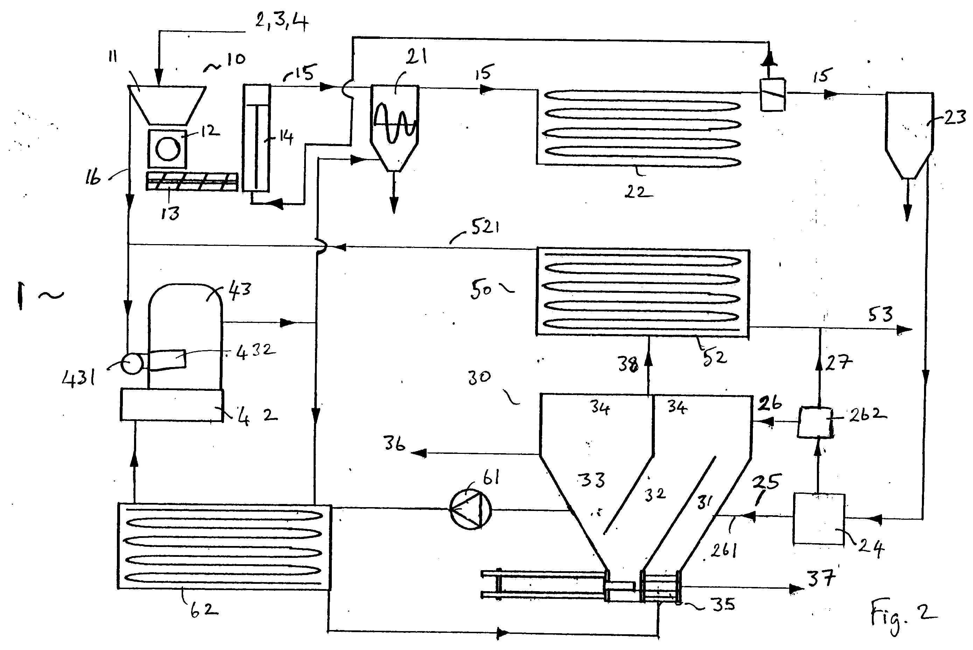

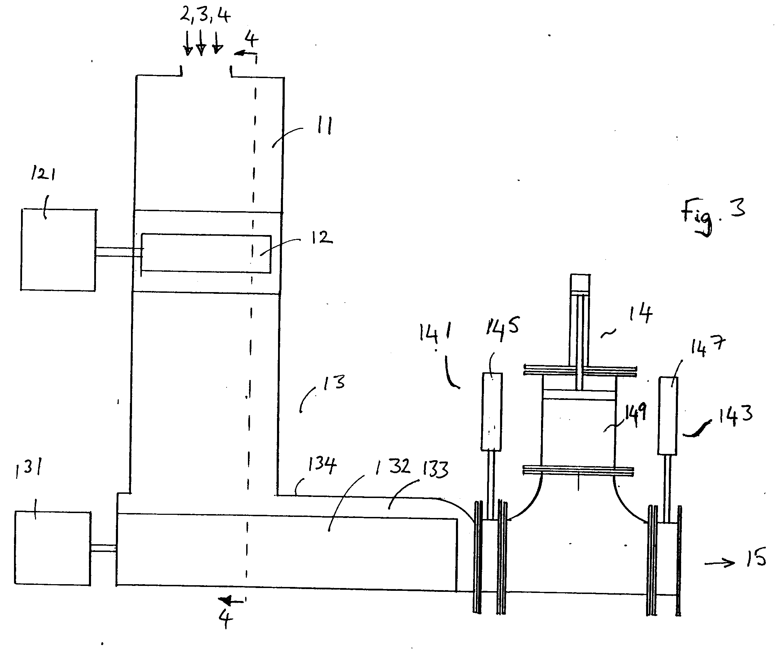

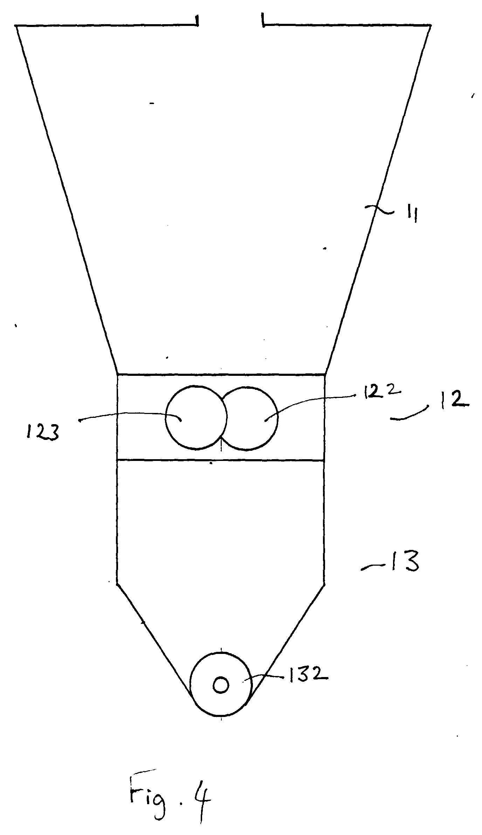

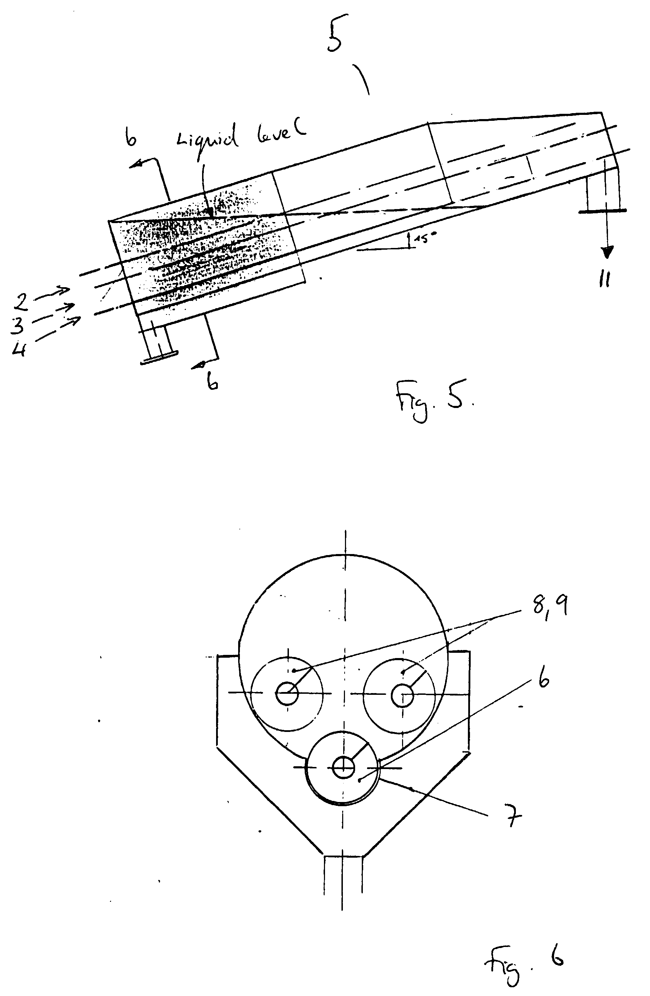

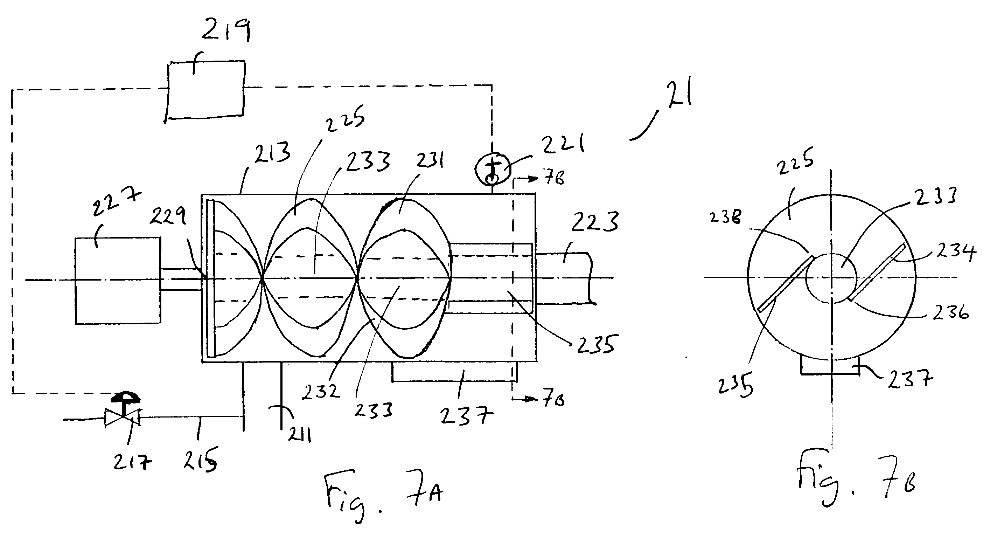

Fig. 1 is a schematic diagram showing the primary flows in the rendering system 1 according to the present invention. Fig.2 is a schematic representation of the elementary components of the present invention as well as their inter-relationships. These elements will be described in detail with reference to Figs. 3 - 18.

In Fig. 1 on the left side, thick vertical lines trace the primary flow of the raw material 2-4 during its processing into the end products, e.g. fat 36 and defatted solid cake or cracklings 37. The processing consists of consecutive in-line steps grouped into three sections 10, 20, 30. Within each section, all steps are preferably physically embodied as components of a single, integrated, multifunction machine, rather than as separate machines coupled to one another. Examples of multifunction machines are provided by the combined drier and defatting press unit 30 and the combined expander, filter and pressure regulator 24.

The feeding unit 10 receives the raw material 2-4, e.g. bones, meat offal, hair, reduces it in size and feeds it to the sterilisation unit 20. If necessary a device 5 may be located before the feeding unit 10 which may separate off any free water and blown air as well as homogenising the pre-dehydrated raw material. The raw material 2-4 is preferably transported as continuously as possible, either together or in separate partial flows, to the feeding unit 10. Intermediate buffers on this transportation path and in the reception vessel 11 of the feeding unit 10 should be kept as small as possible. The reception vessel 11 is preferably only used for compensation of small flow peaks, e.g. when using devices such as air canons which may provide discontinuous flow of raw material. A shredder 12 and a feeding pump 14 are preferably kept small as the system works continuously rather than in batches.

A sterilisation unit 20 receives the partly-treated material 15 from the feeding unit 10 in a continuous way and under pressure. Preferably, the process material 15 is rapidly heated up to the required sterilisation temperature by injection of live steam in a steam heater 21. Alternatively, a steam jacket may be provided around the steam heater 21 and a hollow core stiffer within so that the material 15 is heated indirectly. The necessary temperature and pressure are maintained in a holding tube 22 for a determined minimum period of time. A pressure vessel 23 may provide a mechanical damping device for stabilisation of the sterilisation pressure. Expansion and phase separation into a liquid and a solid phase in an expander 24 follow sterilisation. The solid phase 25 and the fat fraction 26 of the liquid phase are immediately transferred from the expander 24 to a drying unit 30. The water fraction 27 of the liquid phase is removed with waste water 53 from the system.

The drying unit 30 is a very compact machine consisting of a number of physically separate zones. In the first zone 31, the largest amount of water is evaporated from the partly pre-dehydrated, sterilised fractions of process material 25 in the presence of hot fat. In the following post-drying zone 32, the process material 25 is dried to its final moisture content of about 5%. At the bottom of the post-drying zone 32, the dried solid material is concentrated by sedimentation and led to the defatting press 35 whereas the molten fat 36 can flow off to a fat storage. In the defatting press 35, the fat is pressed out of the solid fraction 25. Pressed cracklings 37 are then led away to the storage via a conduit.

The right side of Fig. 1 shows the secondary circuits and systems in a schematic way. The different steps within each circuit are grouped into three units 40, 50, 60. The steam unit 40 produces the steam necessary for heating the process material 15 in the sterilisation unit 20 and for heating the fat in the heating unit 60. A water softener 41 for the process water 55 and a condensate vessel 42 for receiving the steam condensates may be integrated into the steam unit 40. The steam generator 43 functions in a continuous way. The odours from the odour sources together with the circulated ventilation air are continuously incinerated in the burner 432 of the steam generator 43.

In the condenser unit 50, the water vapour 38 originating from the different zones of the drier 30 are condensed with process water 55 in a water condenser 52 or, alternatively, in an air-cooled condenser. Optionally, a mechanical foam separator 51 can be provided to separate liquid from the vapours 38 so that the condenser 52 doesn't become contaminated. Heated process water 54 delivered from the condenser 52 may be used for cleaning purposes. A heat exchanger 62 in the heating unit 60 receives and heats the circulating fat for the drier 30. A circulation pump 61 pumps the fat through this heat exchanger 62 into the press zone 347 below the drier 30.

### 1. RECEPTION VESSEL

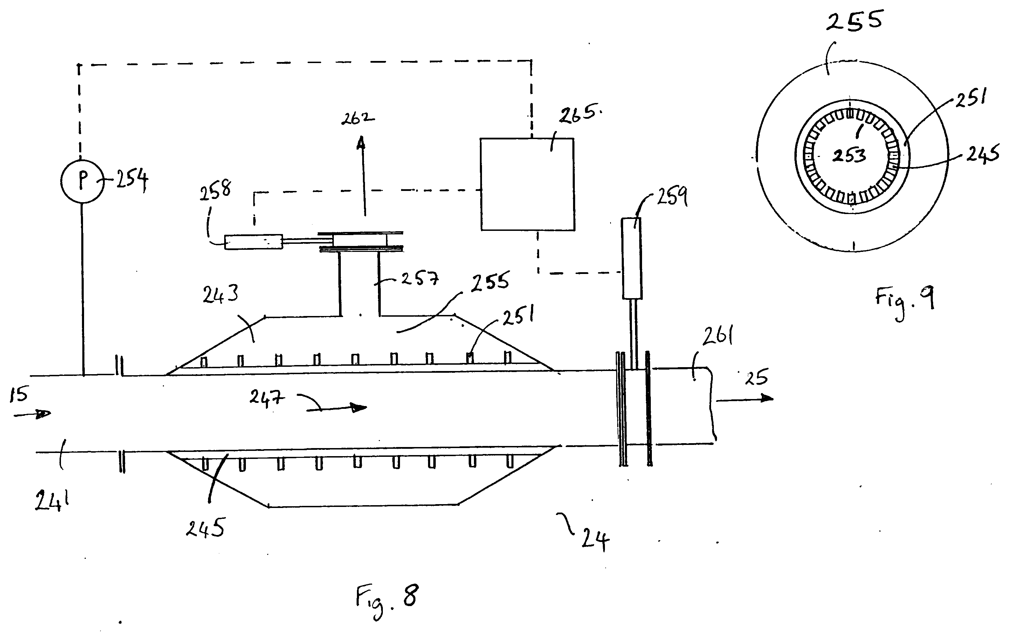

The reception unit 11 will be described with reference to Figs. 2 - 6. Fig. 3 is a schematic cross-sectional view through the reception vessel 11, the crusher or shredder 12, feeding screw 13 and feeding pump 14. Fig. 4 is a schematic cross-sectional view of the reception vessel 11, shredder 12 and feeding screw 13 perpendicular to the view in Fig. 3. Various kinds of waste 2-4 from the work stations in the slaughterhouse or meat processing factory are collected in the reception vessel 11, e.g. guts, entrails, hair, feathers, blood, rejected meat, bones, fat. Preferably, there should be as little buffering of waste materials as possible between the work stations where the waste 2-4 is generated and the reception vessel 11, so that the waste 2-4 can be received and processed in a fresh state. For this reason transport systems should be organised in such a way that there is a continuous flow of raw material 2-4 to the reception vessel 11. This allows the raw material 2-4 to be fed to the rendering system 1 of the present invention with as little decomposition as possible. This permits the volume of the reception 11 to be kept small and it need only be used for accommodating peaks in the supply. If these peaks are relatively small, the reception vessel 11 will be minimally occupied as it is continuously fed and immediately continuously evacuated.

The reception vessel 11 preferably has a form which prevents bridging of the solid raw material 2-4, e.g. skin and bone. The reception vessel 11 is closed at the top. It is maintained at a slight under-pressure via air extraction which brings the odour gasses to the combustion chamber 432 of the steam generator 43 via conduit 16. Connections to external transportation systems, such as conveyor belts, mass conveyors or lift and dump systems, are preferably closed off in an air-tight way.

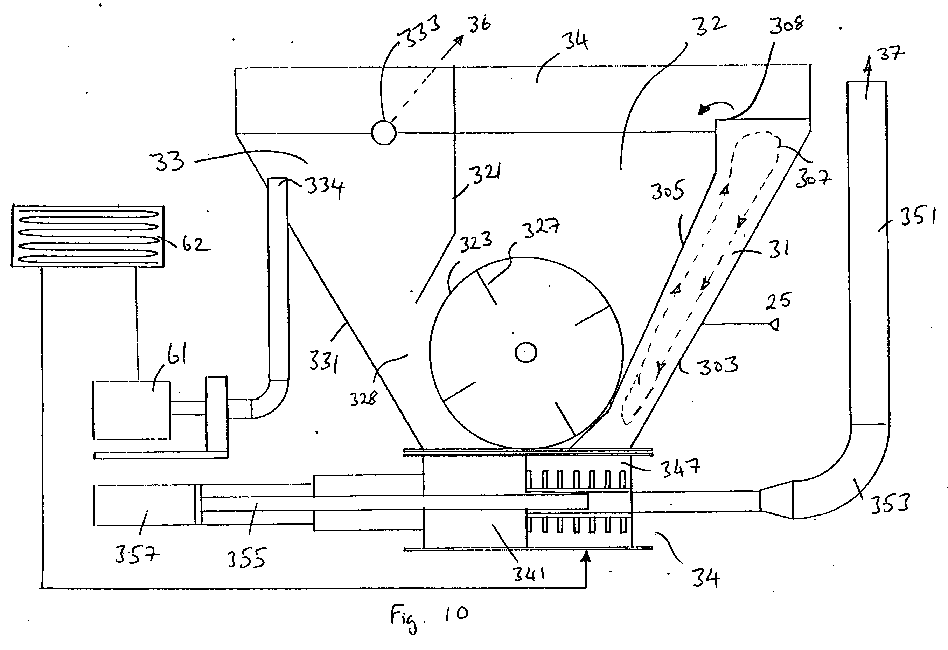

Optionally, e.g. where waste material 2-4 is blown pneumatically into the installation by means of air canons, a completely closed and slightly tilted transport mechanism 5 shown schematically in Figs. 5 and 6 having a bottom feed screw 6 is preferred. Fig. 6 is a cross-section through the mechanism 5 of Fig. 5. A sieve section 7 may be provided at the bottom of the screw trough so that water blown in with the raw material 2-4 can be filtered off and evacuated via a siphon with a fat separator. In this way, considerable amounts of water present in the pneumatically transported offal, meat, hair and guts can be separated before the main processing begins. The received and partly pre-dehydrated raw material 2-4 is dosed by the slowly rotating bottom feed screw 6 to the shredder 12 via a small sized reception vessel 11. One or more additional screws 8 and 9 can be provided for uniformly dosing difficult waste material such as hair, feathers and bones without blocking. These additional screws 8, 9 are preferably arranged parallel to the bottom screw 6 and are positioned sideways or partly on the top thereof. When two additional screws 8, 9 are used, they may rotate in opposite directions thus creating a circulating rolling movement in the plane parallel to the inclination of the bottom trough.

The upper side of the tilted transport mechanism 5 preferably has an upward inclination in the direction of the reception vessel 11 and shredder 12 so that all the blown air and the odours released during the sieving and the homogenisation are led to the exit of the transport mechanism 5 without accumulating. The blown air is preferably removed or sucked away directly to the suction port 431 of the burner 432 via conduit. As the blown air from an air cannon is released in pulses, the transport mechanism 5 is preferably ventilated continuously with fresh air via a calibrated suction opening (not shown) placed above the maximum material level and having a one-way valve located in the front thereof.

Depending on their dimensions, bones can also be blown into the reception vessel 11 after having been reduced in size, for instance, by a small crusher next to the slaughter line. Liquid raw material such as blood and sludge are preferably dosed immediately to the upper side of the shredder 12 either directly from the slaughter line or via a storage tank.

The reception vessel 11 combined with the transport mechanism 5 according to the present invention guarantees continuous feeding, whereby a restricted but very efficient homogenisation of the raw material 2-4 is achieved. Raw material 2-4 is partly dehydrated as it moves continuously forward and comes into contact with the sieving section 7 several times, whereas the blown air is evacuated in a controlled way.

### 2. CRUSHER OR SHREDDER

The crusher or shredder 12 comminutes the waste material 2-4 to the legally prescribed size, e.g. ≤ 50mm. The shredder 12 can be kept small as the waste material 2-4 is continuously supplied and processed. This also reduces the energy consumption and the maintenance costs. Hence, the capacity of the shredder 12 may correspond to the nominal capacity of the installation. A suitable non-limiting shredder is a double-axis shredder type B400V from Bomatic, Germany.

The crusher 12 also can have a metering effect on the feed to the installation, which drastically reduces the contents of the transition zone to the feeding screw 13 and encourages clog free functioning.

The use of a double-axis shredder 12 in accordance with the present invention results in a shredder 12 with a small height and the waste materials 2-4 are optimally reduced in all three dimensions thus reducing the risk of clogging. The shredder 12 operates synchronously with the feeding screw 13 and the feeding pump 14. Excessively large pieces of meat or carcasses can, if necessary, be manually or mechanically reduced in size before introduction into the shredder 12.

### 3. FEEDING SCREW

A short feeding screw 13 transports the shredded waste materials 2-4 from under the crusher 12 to the feeding pump 14. The screw's main function is to collect the shredded waste materials 2-4 and to supply them under light pressure to the inlet side of the feeding pump 14 so that a maximum filling of the cylinder 149 can take place. The feeding screw 13 operates synchronously with the feeding pump 14. The form of the feeding tube 134 or the screw 132 allows for any excess output of the feeding screw 132 which is larger than the throughput of the feeding pump 12, to flow back naturally either via the space 133 or via the centre of an open screw. This prevents unnecessary wear, energy consumption and undesired separation effects. A suitable non-limiting feeding screw is 1500 mm long with a diameter of 200 mm. Nominal rotation speed is 20 rpm and a throughput of 1400 kg/hour or more depending upon the required throughput.

### 4. FEEDING PUMP

The feeding pump 14 may be preferably a single-cylinder hydraulically driven volumetric pump with a low adjustable pump frequency. Cylinder diameter may be preferably 200 - 300 mm with a stroke length of preferably 200-400 mm and a speed of preferably 3 - 6 strokes per minute generating a pressure up to 6 bar and having a throughput of 1400 kg/hour or more. The pump 14 feeds the shredded waste materials 2-4 continuously into the steam heater 21. The setting and maintenance of the throughput of the pump 14 is important, as it determines the retention time in the holding tube 22. Where a legally prescribed minimum retention time during sterilisation is required, e.g. 20 minutes, the pump capacity should be chosen so that it may never deliver too much, e.g. its hourly rate should not be higher than three times the contents of the steriliser for a 20 minute retention time.

The pump pressure is preferably always maintained higher than the required minimum pressure, e.g. ≥ 3 bar. Moreover, a safe overpressure above this minimum pressure ensures that the material to be processed in the sterilisation unit 20 doesn't flash as this would negatively affect the retention time. Pump 14 preferably includes hydraulically driven valves 141, 143 of the sliding type. These valves 141, 143 move fast in order to reduce the pump frequency and provide a sufficiently large throughput that the cold shredded waste materials 2-4 can pass without clogging problems and/or undesired dewatering effects. The sealing slides 145, 147 of slide valves 141, 143 act like knifes and can break or cut pieces of waste, thus guaranteeing a practically perfect seal on closing. After every closing movement a position sensor checks whether the valve 141, 143 is actually closed, thus avoiding any undesired return flow of material to the feeding screw 13. Both valves 141, 143 are controlled such that one of them is always closed.

### 5. HEAT TREATMENT APPARATUS

One aspect of the present invention relates to a compact heat treatment apparatus 21 for the clog-free, continuous in-line thermal and/or chemical processing of heterogeneous, liquid, paste-like and/or viscous media which is troublesome to transport, pump and/or mix, whereby, on the one hand, the mixing necessary for the process is achieved by means of a controlled internal circulation with backflow along the centre line of the apparatus and, on the other hand, a clog-free exit of the medium from the apparatus is achieved by means of a dynamic medium guide, so that at any time a continuous, clogging free and controlled operation of the apparatus is guaranteed while the predetermined process parameters can be accurately regulated. If sterilisation is not required, the heater 21 may be omitted and the material 15 fed directly to the drier unit 30.

An embodiment of the steam heater 21 of the present invention will be described with particular reference to Figs.2 and 7. Fig. 7A is a schematic longitudinal cross-sectional view through the steam heater 21 in a plane parallel to the processing flow direction of material 15. Fig. 7B is a cross-section perpendicular to the section in Fig. 7A. The partly processed material 15 leaving the feeding pump 14 includes a mixture of different kinds of pre-shredded vegetable or animal wastes such a meat rests, bones and hair or feathers. Preferably, the material 15 to be processed is heated up during passage through the steam heater 21 to a constant temperature, e.g. the sterilisation temperature, by the time it leaves the heater 21. Heating is preferably by direct injection of live steam. Alternatively, the heater 21 may be provided with a steam jacket and the material 15 heated indirectly.

In this embodiment of the present invention, the material 15 is pumped (preferably by the feed pump 14 in accordance with the present invention) via a supply outlet 211 under pressure into the steam heater 21. The steam heater 21 preferably receives the cold raw material 15 from the feeding pump 14 via a vertical connection tube 211 of at least 2 meters. This prevents steam or heated process material 15 from flowing back to the feeding pump 14. Just before entering the main vessel 213 of the steam heater 21, at the injection point 215, pressurised steam is injected into the material 15. Live steam injection guarantees quick heating with sufficient penetration into the core of the shredded solid waste particles. The dosing of the steam is regulated by an automatic control valve 217, which is controlled by a feed back control circuit 219 using a signal from a temperature sensor 221 as a control variable. The sensor 221 may be located at the outside of and approximately in the middle of the vessel 213 of the steam heater 21 and penetrates into the flow of material 15 being heated in the heater 21.

The position of the temperature sensor is important. Due to the flow pattern of the material 15 in the heater 21, it is preferable if the temperature of the material 15 is measured intermediate the steam injection point 215 and the exit 223 of the heater vessel 213. This allows the effect of a changed steam dose to be measured very quickly as the material speed at the measurement point is higher than the average medium speed through the heater 21 whereas, the measurement takes place at a sufficient distance from the exit 223 that the system can anticipate and react in sufficient time to predict and achieve the desired temperature at the exit 223. This process is controlled to achieve the shortest possible heating time with the lowest acceptable temperature, which is the best situation for the least breakdown of the structure and quality of the material 15. This prevents, for instance, collagen from being liberated which could result in gluing problems later on in the drier 30.

The vessel 213 is preferably cylindrical on its inside. A screw 225 with an internal longitudinal hollow space 233 is provided in the vessel 213 and driven by a motor 227 via a reduction gear. The screw 225 may be shaftless or have a small diameter shaft. The screw 225 has its axis parallel with the housing of the vessel 213 and is sealed at its one end by means of a mechanical, axially mounted gland packing 229. The screw 225 generally is located, with some small wear gap, adjacent the cylindrical housing of vessel 213 which functions, on the one hand, as screw trough and, on the other hand, as guide for screw 225. The height of the shaft blade 231 is less than the inner radius of the vessel 213. The screw 225 has holes or open spaces at its centre so that these holes form a hollow cylindrical space 233 through which the material 15 can continuously flow back parallel to the centre line of the heater 21. Preferably, the screw 225 is a double screw with two parallel rotating helical screw blades 231, 232.

The screw 225 transports the material in the forward direction towards the exit 223, whereas the return flow path to the entrance of the heater 21 is provided by the central cylindrical space 233. This return flow is important for the proper functioning of the heater 21, particularly with respect to the accurate control of the temperature of the material at the exit 223. This can be adjusted by selecting the number of revolutions 235 of the screw 225 such that the resulting forward material flow, i.e. in the imaginary shell between the external and inner diameter of the screw 225, is substantially larger than the nominal material flow rate exiting the heater 21. Thus, the material flow pattern for a given medium is dependent upon the screw pitch of the screw 225. The use of screw 225 as a mixing paddle allows mixing, heating and transport without clogging of the difficult materials 15 contemplated by the present invention, for example a meaty paste with pieces of bones and hair. The vessel internal diameter is generally much larger than the diameter of the feeding tube 211 and there is plenty of free space between the screw blades 231, 232 as well as in the open inner construction of the screw 225, so that the heater 21 operates practically clog-free.

For achieving a clog-free output of the material 15 from the heater 21, the ends 234, 235 of the screw blades 231, 232 at the end of the shaftless screw 225 are adapted in such a way that it guides and centres all the material 15 towards the central exit 223. The orientation of the screw blade ends 234, 235 is adapted to transition smoothly from a radial direction into one tangential to the exit tube 233 as best shown in Fig. 7B. This gradual adaptation of the screw blade form preferably starts at some distance past the mid-point of the shaftless screw 225 and reaches its maximum at the exit end of the screw 225. At this position the inner lip 236, 238 of the screw 225 is the same diameter as, or smaller than the diameter of the exit tube 223, and the ends 234, 235 of blades 231, 232. Due to this adaptation of the screw blade form, the forward thrust of the screw 225 is gradually transformed into a thrust towards the centre of the vessel 213 which increases the backflow effect. Moreover, all parts are guided in a continuous and dynamic way within the vessel diameter to the exit 223, so that they leave the heater 21 in a clog-free and unproblematic way. By allowing the ends 234, 235 of the screw blades 231, 232 to abut the end surface of the housing 213 of the heater 21, while allowing for a small gap, and by continuously bringing the material 15 to be processed to the central exit 223 of the heater 21, the deposition of the material 15 at these spots is avoided.

Preferably, the vessel 213 and the screw 225 are arranged horizontally. At the bottom of the vessel 213, preferably a little outside the vessel itself a trap 237 is provided in which heavy parts, such as metal parts, can settle through sedimentation. Such metal parts can be freed from the surrounding material 15 by injection of steam in that zone at regular intervals so that lighter fractions can be washed out. The space 237 is preferably conical in shape. Any metal can regularly be tapped off via a manually operated tap.

A normally closed emergency shut-off valve may be provided at the beginning and(/or end of sterilisation which can be either manually or automatically closed for freeing possible obstructions of the pump valves 141, 143 without pressure loss in the holding tube 22. These obstructions can occur due to foreign objects such as rubber, ropes, metal objects, etc.

### 6. STERILISER

Recent European guidelines define exactly the process parameters for a sterilisation system for animal waste and slaughter by-products. The material must first be reduced to a particle size of less than 50 mm, which can be achieved by a crusher or shredder 12 having a teeth width of less than 50 mm. Furthermore, in the steriliser 20 the material 15 to be processed must be maintained for at least 20 minutes at a temperature of at least 133°C at an absolute pressure of at least 3 bar. If sterilisation is not required, steriliser 20 may be omitted and the material 15 may be transported directly to drier unit 30.

The steriliser 20 in accordance with the present invention complies with these parameters using a continuous tube system. The material 15 to be sterilised flows through a holding tube 22 tube as a kind of discontinuously transported plug at such a speed that the minimum retention time of 20 minutes is achieved. An optimal plug quality may be achieved by the right choice of the tube diameter for the sterilisation tube. Pump frequency and stroke distance of the pump 14 play an important role for the pulsating operation (discontinuous plug flow) of the holding tube 22. By restricting the maximum throughput of the feeding pump 14 the minimum retention time of the material in the holding tube 22 can be maintained. On the other hand, the throughout is controlled as closely as possible to provide the minimum legal limit, e.g. 20 minutes retention time in order to achieve a minimum breakdown of the material 15.

The material 15 fed to the holding tube 22 is pre-heated by the steam heater 21 up to a temperature so that it will remain above the minimum prescribed temperature throughout its passage through the holding tube 22. A temperature sensor measuring the initial sterilisation temperature may be provided at the outlet of the steam heater 21 or at the beginning of the holding tube 22 for control and recording. A second temperature sensor may be provided at the end of the holding tube 22 for measuring and recording the exit temperature at the end of the holding tube 22. One or two pressure sensors may also be provided at the same locations as the temperature sensors for control and recording purposes. The holding tube 22 is preferably sufficiently insulated for maintaining the required temperature over the entire sterilisation path. However, it is preferred if the flow of material 15 can be diverted by a three-way valve via a conduit to the inlet of pump 14 so that material 15 which falls below the required temperature can be recycled through the heater 21 and holding tube 22. This is particularly advantageous at start-up when the complete installation is cold.

The feeding pump 14, typically a one-cylinder piston pump, in conjunction with the expander and pressure maintaining device 24, builds up the pressure in the sterilisation unit 20. The pressure maintaining device 24 beyond the holding tube 22 maintains the pressure in the system by allowing material to pass only when the pressure is high enough.

### 7. PRESSURE VESSEL

The pressure vessel 23 operates as an expansion vessel towards the end of the sterilisation path. The gas space of this pressure vessel 23 can be filled with a separate gas, e.g. air or nitrogen, or with gas generated in the system. Preferably, the gasses are not condensable. For continuous systems in which the medium is supplied in pulses by means of for example, a piston pump, this pressure vessel 23 compensates the small pressure variations generated by these feeding systems as well as those generated downstream by the pressure maintaining device 24. During the press stroke of the feeding pump 14 a pressure pulse is generated to which the pressure maintaining device 24 reacts only with a certain delay. This results in small increases of pressure which are damped by the pressure vessel 23. During discharging of material from the pressure maintaining device 24 the opposite effect occurs: small pressure decreases are generated on release of material from the device 24 which are compensated in the pressure vessel 23, so that the minimum pressure is maintained and no flash occurs in the holding tube 22. Depending on the composition and properties of the medium 15, the pressure vessel 23 can be provided with agitating devices, such as screws or stirrers for the smooth and clog-free operation thereof The vessel 23 may include sedimentation and/or floatation zones for separating foreign objects, such as metal and plastic objects. A metal trap of the same type as the one 237 in the steam heater 21 may be provided at the bottom of the pressure vessel 23. Its efficiency, however, is higher as the material 15 to be processed become more fluid/liquid due to sterilisation, so that smaller pieces of solid objects such as metal can sediment more easily.

### 8. EXPANDER

A further embodiment of the present invention includes a compact apparatus for the clog-free, continuous in-line expansion of heterogeneous, liquid, paste-like and troublesome media, namely an expander, separator/filter and pressure maintaining device 24. Under the influence of the upstream system pressure, a fluid fraction can be filtered through passage of the medium through an adapted filtration cage which is effectively an extension of the tubes supplying and removing material from the expander 24. The separated liquid is caught in a housing which encompasses this filtration cage and the thickened solid fraction leaves the filtration cage via the exit tube. The exit and entry tubes to the apparatus may have practically the same diameter as the filtration cage so that a clog-free passage of this fraction through the filtration/separation apparatus is achieved. For maintaining uniform operation of the filtration and expansion, the expansion takes place on two separate fractions. The opening operating pressure of valves governing the liquid expansion is set at a slightly lower pressure than the opening operating pressure of the valve controlling release of the thickened solid fraction from the expander 24.

The expander 24 receives hot material from the holding tube 22 which may consist of a mixture of different kinds of pre-shredded vegetable or animal wastes such as meat rests, bones and hair or feathers as well as a liquid fraction which may include water and molten fat. The expander 24 allows the pressure of the material 15 from the holding tube 22 to return to about atmospheric pressure, whereby it is important that the sterilisation pressure in the holding tube 22 is always kept above a minimum level in order to comply with the minimum sterilisation requirements. The expander 24 ends the sterilisation process by releasing the pressure at the end of the holding tube 22 in a continuous and uniform way. Simultaneously, liquid fractions such as water and molten fat can be separated by using the expander 24. The expander 24 in accordance with the present invention will be described with reference to Figs. 2, 8 and 9. Figs. 8 and 9 are schematic cross-sections through the expander 24.

A cylindrical filtration cage 243 having substantially the same diameter as the inlet tube 241 is provided in expander 24. The filtration cage 243 consists of cage bars 245 parallel to the flow direction 247 and grouped around to form a tubular envelope best shown in Fig. 9. On the outside of cage bars 245, matching cage rings 251 are mounted. At the inside of the cage surface, uniform filtration gaps, 253 approximately 0,1 - 0,3 mm, preferably 0,2 mm wide, are provided between the bars 245. The pressure in the sterilisation system 20 causes the filtration of liquid fractions during the passage of the medium through this cage 243 which can flow into the surrounding space 255 and away via conduit 257. A concentrated solid fraction is left at the end of the cage 243 and is fed to the drier 30.

The filtered liquid fraction mainly consists of water 27 and molten fat 26. The filtration thereof is possible because proteins coagulate and can easily be extracted from the liquid phases as a consequence of the previous heat processing. Blood coagulates completely. The presence of blood has an excellent catalytic effect on the coagulation of other proteins. Thus, it is possible to completely thermally co-coagulate organic sludge in the presence of a reduced amount of blood, which is not possible always without blood.

The main advantage of this 'warm' filtration is the energy saving as water is extracted physically instead of evaporating it. The filtrates are sterile, thus complying with the legal, e.g. European, regulations on waste water originating from such plants. The solid fraction 25 fed to the drier 30 has a low and uniform water content, thus drastically reducing the dimensions of the drier unit 30 and its heating source as well as the energy consumption.

The expansion occurs in two separate pressure phases, each being initiated at different pressures. In the first phase, the liquid fraction coming from the filter cage 243 is expanded separately and fed to a small fat separator 262 provided next to the drier 30. Any emitted vapour is led via the gas space 34 above the drier 30 to the condenser unit 50. The fat 26 from the separator 262 flows to the evaporation zone 31 of the drier 30 for subsequent drying. The separated water comes free in the separator 262 in the form of warm waste water 27 which is discharged as waste 53 with condensed water from the condenser unit 50. If necessary, subsequent cooling is possible. As the expansion of liquid can occur with a very small pressure drop across the cage 243, the pressure in the space 255 of the press cage, and, hence, the filtration pressure, is low and stable. This means that with a specific slit width, the quality of the filtrates is constant. The right selection of slit width and pressure prevents escape of solid material. Maintaining a small, but stable filtration pressure results in the filtration being performed in a uniform, uninterrupted way and independent of the feeding pump 14.

In a second phase, the solid fraction is expanded via a simple fast working slide valve 259 with a slides optionally in the form of a knife. The expanded solid fraction 25 is carried via a short connection tube 261 to the evaporation zone 31 of the drier 300.

As the press cage 243 becomes increasingly saturated with the solid fraction, the back-pressure increases slowly above the operating pressure of the expansion valve 258 for the liquid fractions. This valve 258 opens and releases some liquid which results in a lowering of the system pressure. As the cage 243 becomes full of filtered solid material, the system pressure rises further as the expander 24 is effectively blocked and the feeding pump 14 continues to pump in more material 15. When the system pressure reaches the somewhat higher operating pressure of the expansion valve 259 for the solid fraction, the valve 259 is briefly opened so that part of the solid fraction is released and expanded. At the same time, the plug of solid materials moves up in the press cage 243 so that fresh material 15 flows into the press cage 243 enabling return to the first phase of filtration of liquid by operation of valve 258. The stable consistency of the solid fraction assists in a regular operation of the valve 259.

A pressure sensor 254 for the system pressure is preferably located between the pressure vessel 23 and the expander 24, and preferably as close as possible to the latter in order, on the one hand, to be less sensitive to little pressure peaks from the feeding pump 14 and, on the other hand, to be able to control the expander 24 as directly and sensitively as possible. An emergency shut-off valve may be provided upstream of the press cage 243 and can be closed either manually or automatically in order to alleviate possible clogging or blocking of the valves 258, 259 by demounting these valves 258, 259 completely without pressure loss in the sterilisation part.

The operating pressures of valves 258, 259 may be set by hand. Suitable valves 258, 259 may be obtained from Statsjö Bruk, Stavsjö, Sweden in particular knife gate valves with circular or V-shaped ports and/or with V-shaped or O-shaped boed knofe. To control the operation of valves 258, 259, an electronic, pneumatic or hydraulic control unit 265 may optionally be provided which operates valves 258, 259 in dependence upon the output of the pressure sensor 254. The control unit 254 is preferably adjusted so that it opens valve 258 at a slightly lower pressure than valve 259.

In order to solve the problems created by conventional slow moving valves, the present invention can include fast moving expansion valves 258, 259 which only react about one pre-settable operating pressure with a little or preferably no hysteresis. Hence, the expansion valve 259 for the solid fraction opens more or less instantaneously and, if necessary, completely if the pre-set pressure is exceeded either because of an increase of the upstream system pressure or because of clogging. As the upstream pressure suddenly decreases as the valve 259 opens allowing the solid fraction to move forward, the fast moving slide valve 259 is able to close accurately at the pre-set system pressure due to its fast action. Pneumatically or hydraulically driven slide valves 258, 259 are preferred having respectively, a sufficient reservoir of pressure air in a pressure vessel close to the slide valve or oil under pressure supplied by a centralised hydraulic generator or compressor with a large pump rate. Fast moving hydraulically driven slide valves 258, 259 are most preferred. Hydraulically driven valves provide the best guarantee for a perfect and complete closure of the valves 258, 259, even if hard objects, such as bones, pieces of wood or plastic are located between the knife and the valve seat. These objects can simply be cut at the end of the closing movement by the slide because of the available hydraulic pressure.

By separating the material 15 to be processed in-line into a liquid fraction 26, 27 and a thickened solid fraction 25, a separate expansion can occur for both fractions each with substantially constant physical properties. Simple expansion slide valves 258, 259 can be used which can be optimally adapted to the medium that is being expanded. For reducing wear caused by too many valve movements per unit time (chattering), the slides of the slide valves 258, 259 can be provided with a special shape such as an initial narrow opening or throat which results in the system pressure decreasing gradually on opening rather than abruptly, thus reducing the number of valve movements. The valve 259 may have an internal diameter in the open state which is similar to that of the expander so that automatic deblocking can be performed without having to interrupt the continuous process or having to open the system.

Each expansion slide valve 258, 259 works independently. Hence, valve 259 can also function without any problem as a single expansion system for processed material 15, e.g. if valve 258 jams or fails. An additional advantage is provided by the phase separation with two separate expansion valves 258, 259.

In accordance with the present invention, a liquid fraction can be obtained in a very simple physical way and without having to thermally evaporate it. Accordingly, the device 24 can also be called a separator or filter in addition to being an expander, and may be used as an independent unit for thickening media which are heterogeneous and contain large solid parts. As the tube diameter close to and within the expander 24 remains substantially constant, any solid parts will pass through the apparatus without blocking.

### 9. DRYING UNIT

The drier according to the present invention eliminates the drawbacks with disc dryers by providing an adaptive continuous fat bath drier with external heat exchanger for fat containing substances, the substances to be dried moving in a controlled way through a limited number of drying zones in which, with respect to energy consumption and wear, maximum use is made of secondary phenomena appearing during the drying, such as sedimentation, flotation, fluidisation and fragmentation.

The drier can be kept compact by having the solid material following a path in the drier which comes as close as possible to the minimum retention time, by filling the drier with a maximum of substance to be dried, by keeping the heat exchanger outside the drier and by minimising the gas space. The time spent in the drier according to the present invention depends upon the amount of moisture in, and the nature of the material to be dried. The larger the amount of water, the longer the material stays in a floating condition before it sinks to the bottom of the second chamber

Wear is reduced to an absolute minimum as, except for a simple circulation pump and, if necessary, one or more slowly rotating screen systems, the drier and the heat exchanger themselves contain no active rotating parts.

A main advantage of the present invention relates to the process itself, as the latter is completely adapted to the drying properties of the solid substances and because the physical effects taking place are optimally used for having the substances following the drying path.

From the process point of view, the drying of a solid, eventually fat containing substance can be considered in a few sub-steps, i.e. heating up, evaporating the free water, post drying of the cell bonded water and the separation of the free fat. The present invention performs these steps in serially mounted, separate drier sections.

First, the evaporation of the free water takes place in an evaporation section. These process steps can and may be quickly executed, the quality of the solid substances is thereby maintained. In accordance with the present invention, it is possible to achieve a very fast evaporation of the free water as the heat necessary for the evaporation is brought directly to the particles to be dried by the recirculation of preheated fat. As the fat suddenly loses the largest part of its heat in the evaporation of water in the first zone, the temperature of the entire drying process, including the evaporation zone, remains low and the quality of the end products is not negatively influenced. This supply of heat there where it is immediately needed is provided by introducing the preheated fat into the evaporation zone close to the point where the medium to be dried is supplied into this zone.

A number of secondary effects take place simultaneously in this evaporation zone due to the evaporation of water and are used for achieving, on the one hand, the mixing in this section and, on the other hand, the separation and transfer of the partly dried particles to the next drying step.

The evaporation of the free water results in large amounts of water vapour which ascend very rapidly in this section. The vertical orientation of the evaporation section results in the upward movement of this water vapour being optimally used for maintaining all particles in suspension and also for bringing the fresh particles optimally in contact with the preheated fat. By inclining the vertical evaporation section slightly, the flow can be controlled for the biggest part as the water vapour bubbles ascend along an inclined wall, thus causing an upward liquid flow at one side of the evaporation section with a downward, return flow along the other inclined side. Hence, a liquid circulation is generated in this part of the drier and is sufficiently powerful to keep the solid substances in motion and in suspension.

Simultaneously, a second secondary phenomenon takes place. Particles which are losing water during this evaporation become lighter and may float. This floatation occurs only in the beginning of the evaporation. In this starting phase, the specific weight of the particles decreases as water disappears because water is heavier than fat and proteins, while, in addition, these particles are made buoyant by the emerging gas bubbles which remain attached to the drying particles for some time. Particles which have lost water most quickly and, hence, are dried most are the lightest and will consequently move rapidly towards the top part of the evaporation section. At this location they flow over a weir together with the circulating fat to a second drying section. Particles which are insufficiently dried and which do not reach this weir, flow again one or more times through the evaporation section until they are sufficiently light to flow over. Hence, the physical properties of particles are used during the drying to adjust the retention time during this first step, i.e. the evaporation of free water.

This second secondary phenomenon is only temporary, this being an additional reason for limiting the average retention time in this first section to a few minutes. If the largest part of the free water has evaporated from a particle and the generated water vapour bubbles have left it, the specific weight increases again and the particles sediment. One of the aims of the present invention (although it is not limited thereto) is to have most particles which flow over into the post-drying phase still in the floating state and to have them enter the sedimentation state only in the second drier zone.

This phenomenon of restoring sedimentation properties of the particles during their drying is used in the second section of the drier for providing a controlled post drying time to the particles under the influence of their own weight, separating them off through sedimentation and bringing them to a central discharge point.

In contrast to the evaporation section having a very strong turbulent regime, the flowing regime in the second section is very quiet. This zone can be looked upon as the real drier section as the particles are post-dried herein. The necessary retention time is generated for providing enough time for the bonded water to leave the particles and for the particles to separate themselves from the main stream of fat.

The post drying time in the second chamber is for most of the substances much longer than the time necessary for the evaporation of the free water and is approximately 20 - 30 minutes. This retention time is achieved best in a vertical and slightly inclined drying chamber in which the retention time is controlled by time to sedimentation of these particles. The post drying time is preferably adapted to the sedimentation time by the design and dimensions of the second drier section.

Preferably the circulation of the particles in the second zone can be assisted in a simple way by providing perforated plates or sieves, which can rotate or are hinged, such that the particles come into one or several subsequent intermediate chambers. These plates are perforated so that the circulation fat can flow through the drier and over the solid material.

As described with reference to the first evaporation section, the water vapour bubbles can group and ascend along an inclined wall in the slightly inclined second drier section. They exit from the evaporation section in a gas space 34 at the top of the drier which is connected to a condenser.

During its passage through the second drying section, the circulation fat provides the heat necessary for the substances to be dried. For most substances to be dried the heat energy required in the second section is rather low compared to the one necessary for the initial evaporation of the free water, so that this heat energy can be obtained from the rest heat of the fat that flows over from the evaporation section to the drying section. Hence, in accordance with the present invention, the post drying of the substances is achieved with a minimum retention time at low temperatures required for the diffusion of the bonded water through the cell walls, so that the quality of the final solid material remains high.

For applications for which the rest heat from the evaporation section would be insufficient for the post-drying, additional preheated fat can be added optionally at the top of the post-drying section.

At the bottom of the second drying zone there is a transition to a zone in which the dried solid material is concentrated. This separation uses the sedimentary properties of the dried substances for collecting them in a central outlet area at the bottom of the drier. This outlet area may be a sedimentation funnel with a baffle under which the circulation fat is removed to a clarifying section in the fat zone of the drier located next to the post-drying zone and in which the sediment collects in the central outlet for dried material. The excess fat, which equals the net production, can preferably flow over at the top of the fat zone to storage as this is the point in the funnel where the clarifying effect is highest. The circulation fat can be tapped off from a middle portion of the fat zone.

An important constructional advantage is that the present invention allows the location of a defatting press in a simple way underneath the drier. The feeding chamber of the defatting press is connected to the bottom of the funnel shaped drying and fat zone, so that the dried substances flow directly into the press without any additional transportation. Moreover, as the evaporation section of the dryer is located adjacent to the post-drying section, it is possible to provide direct liquid communication between the press cage of the defatting press and the bottom part of the evaporation section. This construction allows the fat extruded from the press to be recycled directly to the drier, eventually together with any of the solid material which escapes through the cage. It is preferred to pump the preheated fat from the heat exchanger into the outlet zone of the press cage, so that, on the one hand, the fat and any solid material exiting the press is continuously carried away in the fat stream and, on the other hand, the press can also efficiently be preheated when starting up from a cold state.

In accordance with the present invention various kinds of defatting presses which are appropriate for working with a fat bath can be combined with the drier, including screw presses and plunger presses. Several possibly different presses may be mounted in a simple way underneath the drier, so that depending upon the drier width, a large range of drying and defatting capacities can be achieved.

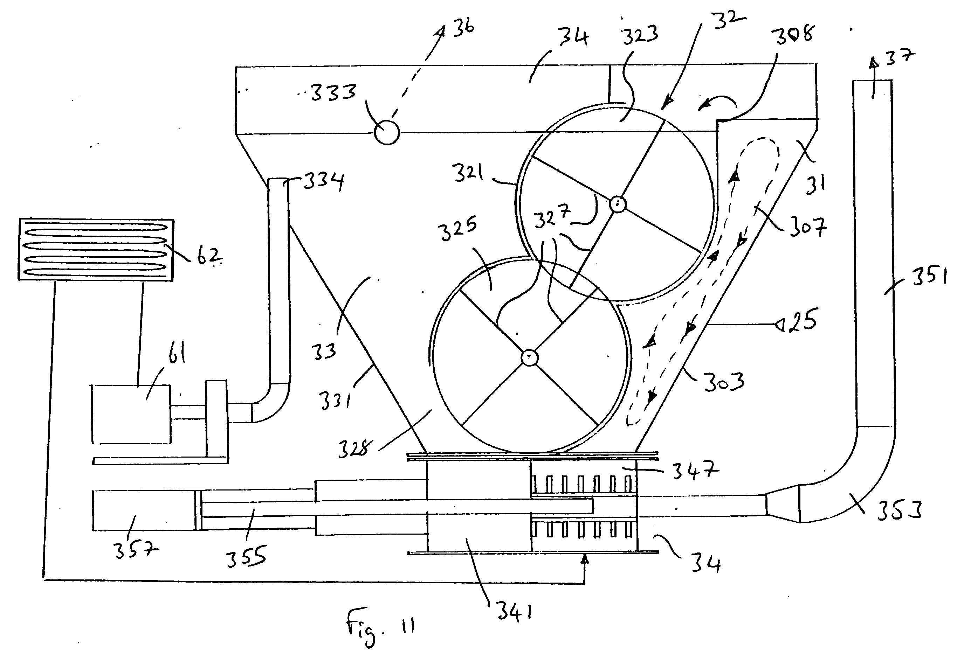

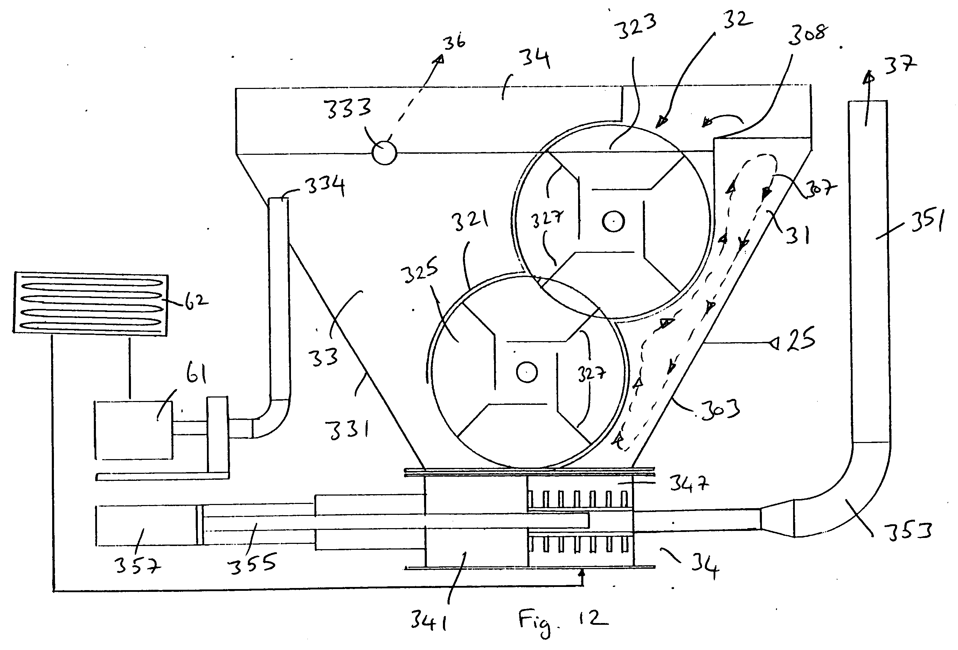

An embodiment of the drier 30 in accordance with the present invention will be described with reference to Figs. 2 and 10 to 12. Fig. 10 is a schematic cross-sectional representation of a drier 30 with a defatting press 35. Figs. 11 and 12 are schematic representations of alternative embodiments of the drier 30 in accordance with the present invention.

The material 25 to be dried may consist of in-line sterilised material comprising various pre-shredded vegetable or animal wastes, such as animal offal, pieces of meat, bones, blood and hair or feathers and is preferably partly pre-dried in an expander 24 of the present invention. The drier 30 in accordance with the present invention dries the material 25 at atmospheric pressure after it has been sterilised and expanded in order to produce, after defatting, a stable end product 37, suitable as a marketable cake of meat and bones. The drier 30 is preferably a fat bath drier 30 with external heating. The material 25 follows a controlled fixed path within the drier 30. While traversing this path, water is evaporated and is collected at the top of the drier 30 in the form of water vapour from which it is led to a condenser 52. The heat necessary for the evaporation is provided by a one-way fat circuit. The fat in this fat circuit is indirectly heated by steam in an external heat exchanger 62.

The drier 30 preferably includes three functional zones: the evaporation zone 31, the drying zone 32, and the vapour zone 34. Optionally, a the fat zone 33 may be included.

The evaporation zone 31 is preferably defined by an inclined vertically oriented section of the drier 30 in which most of the water is evaporated from the material to be dried. In this zone 31, the solid fraction 25 from the expander 24 is introduced in a lower part of an inclined wall 303 thereof. The heated fat from the heat exchanger 62 is pumped via the filtrate chamber 347 of the defatting press 35 to the bottom part of the evaporation zone 31. Water in the material 25 is evaporated practically instantaneously as the solid fraction 25 comes into contact with the hot fat. The freed water vapour bubbles rise to the upper inclined wall 305 of the evaporation zone 31 along which they travel and exit from the fat into the vapour zone 34. This movement of the gas bubbles causes a strong mixing movement in zone 31 thus holding the solid particles to be dried in suspension. Above and adjacent the lower inclined side wall 303 there is a downward movement and the freshly supplied slid fraction 25 is first brought to the lower part of the zone 31 where the contact with the warmest fat will be the quickest. Underneath the upper inclined side wall 305 there is an upward movement. Thus, the contents of the evaporation zone 31 circulate according to a fixed vertically inclined flow path 307.

The upper part of the evaporation zone 31 is provided with an overflow or weir 308 between the evaporation zone 31 and the post-drying zone 32. The fat which is pumped into the drier 30 from the heat exchanger 62 flows over this weir 308 continuously. The lightest solid particles flow with this fat stream. These are the particles from which most of the water has evaporated. Particles which are insufficiently dried are brought back by the circulating fat flow 307 to the bottom of the evaporating zone and undergo the up- and downward movement several times until they finally flow over the weir 308 with the lighter fractions. At the start and the end of a run there are no gas bubbles. The circulation of hot fat provides the heat energy as it flows upwardly through the zone 31.

In the drying zone 32 the material particles are subsequently post-dried in a quiet flow regime. In this zone 32 the fat flows generally downwards. The gas bubbles coming free during this subsequent drying are reduced in size and quantity. They rise slowly up to the upper at least partly inclined wall 321, follow this and emerge into the vapour zone 34 in the same way as in the evaporation zone 31. The downward movement of the solid particles may be assisted by at least one (323) and preferably two slowly rotating screens 323, 325. Each rotor 323, 325 contains several, e.g. four, radial partitions 327. These partitions 327 may be perforated. The single rotor 323 shown in Fig. 10 controls the sedimentation speed of the drying solid particles in the hot fat, breaking up conglomerates of particles and freeing trapped bubbles of water vapour. The particles sink to the lower part of the drier 30 in zone 32 where they are fed to the defatting press 35. The cooled fat flows downwards and exits the drying zone 32 via an opening 328 thereof into the bottom part of a fat zone 33.

The optional fat zone 33 is a small sedimentation funnel in which smaller particles from the drying zone 32 can sink and be brought back along the side walls 331 to the press 35. The fat overflow 333 is located at the upper part and determines the level in the fat zone 33 and the drying zone 32. The production fat 36 is led via this overflow 333 to a clarifier and finally to storage. The suction point 334 of the fat going to the heat exchanger 62 is located a somewhat lower than the overflow 333.

In the vapour zone 34 all the water vapour is collected from the three other zones 31, 32, 33 and led to the condenser 52. For applications during which foam can be formed, a foam centrifuge 51 can be optionally provided in this tube. The vapour zone 34 is preferably gas tight.

Further embodiments of the present invention will be described with reference to Figs. 11 and 12. Items with the same references numbers in Figs. 10-12, refer to the same components. As shown in Figs. 11 and 12 two rotating screens 323, 325 are provided in drying zone 32. These rotating screens 323, 325 are preferably counter rotating. The upper rotor 323 breaks up the layer of particles which float on the surface of the fat forming a layer of solid material thermally isolated from the hot fat. The upper rotor 323 breaks the surface of the fat and, in combination with the wall 321 sweeps floating solid particles downwards, thus immersing them deeper into the fat. Those particles which release water vapour remain light and return to the fat surface on the upstroke of one of the screens 327 of rotor 323. These particles travel round and round within rotor 323 until they lose enough water and become heavier than the fat. Rotor 323 then releases them at the bottom to the lower rotor 325. The latter brings them to the lower part of the drier 30 where they are fed to the defatting press 35. The fat flows downwards through the perforations of the partitions and exits the drying zone 32 via an opening thereof into the bottom part of the fat zone 33. Fig. 12 shows a modification of the screens 323, 325 shown in Fig. 11, in which the partitions 327 are provided with an obtuse angle roughly in the middle so that they are not radial. The form of the partitions 327 in rotor 323 acts like a scoop to better trap particles floating on the surface of the fat and dunk them in the hot fat.

The drying process in accordance with the present invention has several advantages. The drier 30 as well as the heat exchanger 62 can be kept very small. This is due, in part, to an optimal use of the relatively small heating surface in the very compact heat exchanger 62 by heating up only the fat phase. By having the solid material following a path in the drier 30 which corresponds as closely as possible to the minimum drying time, by keeping the heat exchanger 62 outside the drier and by making the gas space in the gas zone 34 as small as possible, the drier 30 can have very small dimensions. The physical structure of the solid material undergoes only very little damage during the drying process which is the best start for an optimal defatting. Wear is reduced to an absolute minimum as the drier 30 and the heat exchanger 62 contain a minimum of rotating parts.

### 10. PRESS

The press cage design in accordance with the present invention is almost entirely determined by the real physical minimum press parameters to be considered when pressing, and not by the secondary conditions, such as, for example, continuous feeding or pressed cake transportation.

During a series of basic experiments on substances to be thickened under pressure, it has been found by the present inventor that most press operations can be executed with a large pressure in a relatively short period of time and that, moreover, the diameter of a compacted press cake in a hollow press cage is not a limiting problem for the contemplated range of press cage diameters. These experiments have been performed by pressing the solid medium by means of a hydraulically driven piston in a simple and small press cage having cylindrically arranged cage bars, whereby the piston is not moved completely up to the end of the press cage, so that a material plug is generated which seals off the cage exit as a kind of cracklings of material. A number of aspects which contribute to the present invention have been determined from these experiments.

It has been found that with a travel of the plunger of a bit more than half the press cage length, the piston transports a reduced amount of solid material into the cage with each stroke, so that if a sufficient and uniform amount of material is supplied at the entrance of the cage, a slice of defatted animal meal is built up at each stroke of the plunger. An integral cracklings of defatted material is generated thereby in which the consecutive slices created by each press stroke can no longer be distinguished. Surprisingly, no substantial differences in the fat contents between the defatted material at the sides and at the centre of the cracklings was determined.

It has been found that during the backward movement of the press plunger, the filtration process is not reversible, so that despite the sudden disappearance of all the press pressure the cracklings does not take up fat at the cylindrical outer side nor at the front. The reason behind this is that the press plunger causes a press operation with a maximum sealing of the solid mass, which sealing is so stable that it becomes irreversible with respect to the filtration. This phenomenon is accentuated by the fact that the slipping movement of the outer wall of the cracklings along the cage bars smears the material in the outer layers creating a static and permanent seal on the surface of the cracklings.

It has also been found that the position of the material plug remains stable during the backward movement of the press plunger. This results in a stabilised sealed cylindrical form to the cracklings, which is jammed in the cage end and automatically seals off the press exit without requiring an additional cylindrical sealing plug. At each press stroke of the piston, as the press pressure increases at the end of the press stroke, the material plug begins to move forward evenly at a specific press pressure, so that a regularly forward moving material cracklings is formed at the exit of the press exit. This means that the press pressure can be regulated in a simple way by increasing or decreasing the resistance of this cracklings when moving in or out of the press cage. This can be done by, for example, reducing the press stroke of the plunger which generates a longer cracklings in the cage and, thus, a larger friction. An alternative and preferred method includes increasing the friction after the press cage by providing on the end of the press cage a tube having the same or somewhat smaller diameter or by using an adjustable diameter section as a press pressure regulator. The main advantage of this press pressure regulator is that its position can be rapidly adjusted to pressure measurements determined from the hydraulic supply to the press plunger, which values are in direct proportion to the static press pressures in the press cage.

The accurate regulation of the press pressure can also be achieved by providing an adapted in-line shredder behind the press cage. The revolution speed of a single or of a plurality of slowly rotating rotors can be adjusted as a function of the desired press pressure. Dependent upon the application, the press pressure can also be used for pressing the cracklings formed in the cage through a small die to form a sausage shape which can be cut by a moving knife into regular pellets. Alternatively, the press pressure may be regulated by a slide valve placed at the exit of the press cage. This is held closed until the pressure has built up on the solid material in the press after which it is opened allowing the compressed cracklings to move forward.

The continuous production of a thickened solid product in the form of an endless stable cracklings allows the product to be pushed directly from the press and under the influence of the pressure achieved in the press to another place without the need of any additional transportation systems. In order to minimise the effect of the supplementary generated tube resistance on the press pressure, the tube diameter beyond the press cage is preferably increased. On the other hand, at this spot and just after the increase of the diameter a breaking elbow can be provided which breaks the material cracklings passing therethrough into pieces before pushing them further forwards.

The experiments have also shown that the press cage is completely self-cleaning which is due to a material movement which is solely parallel to the cage axis, i.e. with the cage bars and their slits. Thus, clogging is continuously and optimally eliminated and any material is pushed towards the cage exit.

It has also been found that an optimal press operation is obtained with slit widths between the cage bars and a tolerance between the piston and the press cage which is quite large compared to those used in screw presses, i.e. slit width up to 1 mm and tolerance up to 5mm. This positive effect is probably due to the rather static filtration during which a cake can be slowly built up over a relatively large filter surface and due to the slow forward movement.

Furthermore, it has been found that the press system according to the present invention can easily function in a submerged state. This allows, for example, direct removal of the pre-thickened material from a feeding chamber to the press cage without the need for additional transportation means. It has also been possible to test the press cage in an arrangement submerged in a filtrate, e.g. with the warm animal fat, whereby the fat coming out of the press cage via a small filtrate chamber located underneath a drier can be fed back to the drying process without any additional transportation means.

It should be noted that the press in accordance with the present invention is insensitive to foreign objects. All objects landing in the press cage go through it without any problems as the shape and size of the passage is constant. Objects blocking the piston at the entrance of the press cage can be detected in time. In this position of the plunger quite a sudden pressure increase will take place in the hydraulic part and this can be detected and alarm signal given or the press stopped automatically, so that damage to the machine can be prevented.

In order to prevent small foreign objects arriving in the gap between the piston and the press cage, a sedimentation space can be provided in the feeding chamber and underneath the plunger in which these foreign objects can sink.

By integrating the press directly in the hot fat circuit, it is possible to warm up the machine together with the other devices and thus to start with a warm press which provides optimal press results even at start-up. The cylindrical press cage can be prefabricated as a single element which is easy to build and to replace and which can be stored as relatively cheap spare part. Pressure regulation systems at the exit of the press cage can be easily exchanged and optimally and cheaply adapted to the nature of the processed material 25.

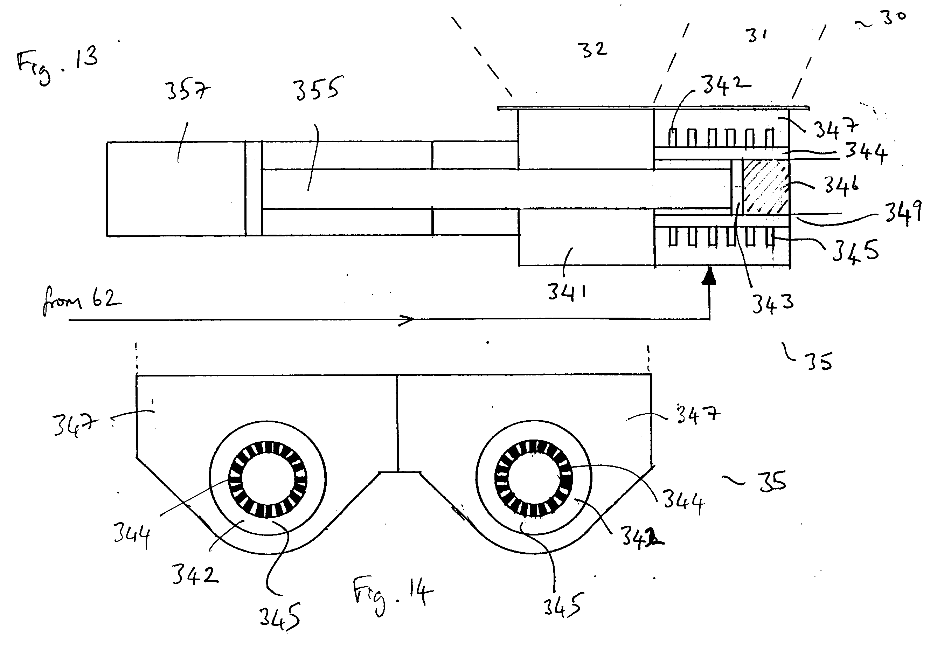

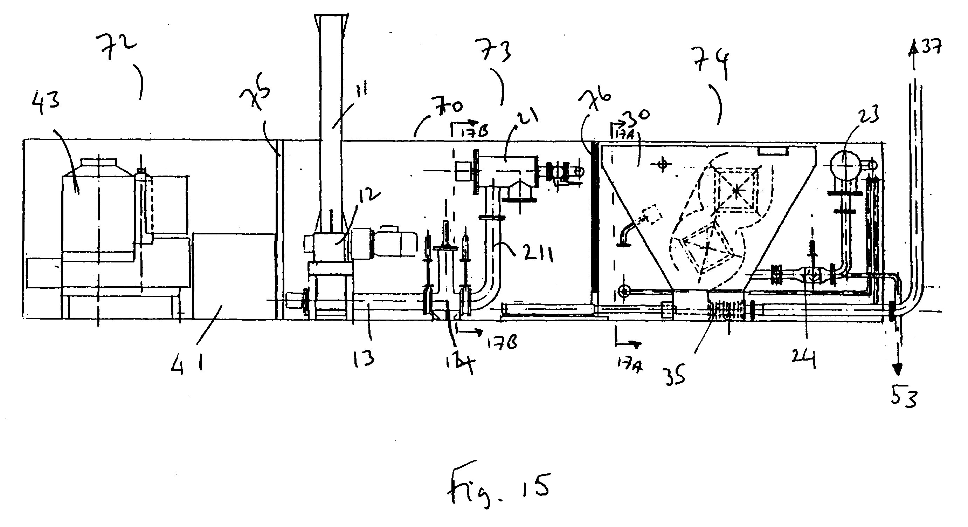

A defatting press 35 in accordance with an embodiment of the present invention will be described with reference to Figs. 2, 13 and 14. Fig. 13 is a schematic cross-section through press 35 in the plane of movement of the plunger 343. Fig. 14 is a cross-section through the part of the press 35 including the press cage 345. In Fig. 14 two presses 35 are shown side-by-side. The press 35 according to the present invention includes a simple apparatus for the continuous high pressure filtration of liquids out of solid material to be thickened in a very compact, hollow cylindrical press cage 345 having a small diameter and limited length. Cage 345 may include longitudinal bars 344 and circumferential rings 342. The filling and pressurisation of cage 345 is preferably achieved by means of a slowly moving plunger 343. Sealing and pressure regulation is preferably achieved by means of a plug 346 of thickened solid material. The press 35 can operate in air or be completely or partially submerged in either the feeding medium or the filtrate or both. One advantage of press 35 in accordance with the present invention is that the expended energy is mainly used for creating the necessary high static filtration pressure and frictional forces are reduced to a minimum.

The material to be thickened in the press 35 may consist of a sterilised and dried material consisting of various pre-shredded vegetable or animal wastes such as offal, pieces of meat, bones, blood and hair or feathers. Preferably, sterilisation and drying of the material is carried out by the sterilising unit 20 and the drier 30 in accordance with the present invention. The material is continuously defatted in the defatting press 35 in order to produce a sufficiently stable end product, providing a marketable cake of meat and bones.

One or more defatting presses 35 are preferably located underneath a fat bath drier, such as drier 30 in accordance with the present invention and is attached thereto with its tunnel shaped housing. However, the press 35 may find application with other dryers or be used separately. In accordance with the present invention the defatting press 35 is preferably operated in a submerged arrangement. The feeding chamber 341 of press 35 may be directly connected to a drying zone 32 of the drier 30. The particles which have been dried in the drying unit 30 collect through sedimentation in the feeding chamber 341 of the press 35. A hydraulically driven piston 343 pushes the fraction which has to be defatted into a press cage 345. The space 347 on the outside of the press cage 345 may be in direct fluid communication, i.e. preferably directly connected with the evaporation zone 31 of the drier 30. However, in accordance with the present invention the press cage 345 may be connected by a pipe or conduit to a remote device, e.g. a dryer. The press fat together with any solid material escaping through the bars of the press cage 345 is led directly back to the drier 30 via this path.

The press piston 343 generates an increasing pressure in the press cage 345 during the inwards movement so that a cracklings of compressed solid material is formed. The press piston 343 of the defatting press 35 is attached to the extremity of the extended piston rod 355 of a hydraulic cylinder 357. The meal cracklings is moved forward at the end of the press stroke until the piston reaches the end of its movement. This final position is located at point about 25% of the cage length away from the cage exit 349. In this manner, the cage 345 is sealed off at that exit 349 by a plug 346 of the pressed material itself. At the cage exit 349, a slightly conical element may be provided (not shown), the form of which may determine the press pressure. Alternatively, or additionally, the press pressure can be accurately adjusted by providing an adjustable mechanical resistance (not shown) at the cage exit 349, which resistance can be a hydraulic valve driven by oil pressure from adjustable hydraulic cylinders. This element may be provided with a press tube 351 (see Figs. 10-12) having a larger diameter for carrying away the defatted solids 37 to storage. A breaking elbow 353 can be provided in this press connection for breaking the meal cracklings. If necessary, a hammer mill can be provided at the end of this tube for milling the meal cracklings. The press cage 345 is a separately wearing part which can be relatively easily disassembled. Its life expectancy is very good because of the minimised movement of the meal and, hence, reduced wear. The cracklings 37 may have a fat content of less than 12% and a water content of less than 5%.

For driving all hydraulic valves, presses and other hydraulically operated devices in accordance with the present invention, a centralised hydraulic pressure generator can be provided.

### 11. WATER CONDENSER

The vapours 38 generated in the drier 30 are condensed in a condenser 52 into waste water 53. Condenser 52 is preferably a water condenser. The condensation space of the condenser 52 is kept at a light under pressure via a connection tube 521 with the suction side of the burner ventilator 431 of the steam generator 43. Non-condensable gasses are removed from the installation via this path and completely burned in the burner 432 of the burner 43. A temperature sensor at the gas exit of the condenser 62 controls the functioning of the condenser 62.

The water condenser 52 has a compact shape and is placed horizontally thus saving space. It is cooled with water of which the flow rate is adjusted by means of a thermostat at the water exit. This allows the recuperation of warm water having a constant temperature. The condensed level in the condenser 52 is adjustable and by submerging the lower cooling water pipes the condensate can be partially cooled off.

### 12. CIRCULATION PUMP

The circulation pump 61 continuously pumps the circulating fat from the drier 30 to the heat exchanger 62 for heating it up. The pump 61 may be a centrifugal pump 61 with a partially withdrawn open impeller allowing trouble-free functioning. The throughput of the pump 61 is adjustable using a throttle valve at the press side and is adjusted to correspond with the evaporation capacity of the drier 30 and the heat exchanger 62. For a specific evaporation capacity the pump throughput can in principle be set as low as possible for maintaining the flow regime in the drying zone 32 as quiet as possible.

### 13. HEAT EXCHANGER

The circulation fat is heated up with indirect steam in the heat exchanger 62. The warm fat is supplied to the evaporation zone 31 of the drier 30 where it gives off its heat to the fractions to be dried.

The fat side of the heat exchanger 62 is a long single continuous tube wound as compactly as possible in a tube shaped steam chamber. This keeps the flow speed in the tube sufficiently high for preventing sinking and sedimentation of the suspended particles in the fat phase. Moreover, a turbulent regime is maintained thus optimising the heat transfer.

The steam side of the heat exchanger 62 is fed with steam from the steam generator 43. The steam pressure is set in function of the desired temperature of the fat. In principle, this temperature is kept as low as possible for damaging the circulation fat as little as possible.

The heat exchanger 62 has practically the same dimensions as the water condenser 52 so that it can be installed next to it. The condensate from the heat exchanger 62 may be returned to the condensate vessel 42 of the steam generator 43.

The heat exchanger 62 can be kept very compact. As only the fat phase is heated up the design of the heat exchanger 62 can be optimally adapted to that medium. Hence, very efficient tube bundles can be used which, because of their construction, provide a very large heat exchanging surface in a very compact housing. The heat transfer is supported even more by applying a turbulent flow regime at the liquid side. By warming up only the fat the protein containing substances are not unnecessarily exposed to high temperatures. Hence, the risk, for example, of blocking of the heat exchanger 62 with collagen when drying bones is prevented.

The amount of heat to be applied can be adjusted in a simple and flexible manner in such a heat exchanger 62 as a series of parameters can be varied separately, such as the circulation rate of the heat carrying medium, the steam pressure, and the temperature at the fat exit independent from the steam pressure.

### 14. STEAM GENERATOR

The steam generator 43 produces the steam necessary for the injection thereof in the steam heater 21 and for the indirect fat heating in the heat exchanger 62. A steam generator 43 is chosen instead of a conventional boiler because of the compact construction, the reduced investment costs, the very short start-up time and the optimal operational conditions within a continuous process with a stable and continuous steam output. By integrating the generator 43 into the installation, all the gasses within the system which cannot be condensed can be incinerated in the steam generator 43 thus eliminating emissions. Preferably the output of the steam generator 43 may be varied, e.g. at least a two-step output such as 50% and 100% or a fully modulated burner.

Steam generator 43 is preferably a water tube rather than a smoke tube steam generator. Preferably, steam generator 43 is once-through and drumless so that the start-up time is short. Further, it is preferable if steam generator 43 has forced circulation of the water through small tubes. A suitable oil-fired, once-through, forced circulation, water tube, drumless steam generator is available from Clayton of Belgium N.V., Bornem, Belgium, e.g. type EO - 100 - 1, having a burner temperature of about 1000°C and generating 1500 kg/hour steam at a pressure of 6 bar. The burner ventilator 431 consumes about 1400 Nm³/hour at full load. Alternatively, a gas or oil fired steam generator type E-254 or SE-254 from Clayton may be suitable, in particular low NOx, low CO types are preferred. It has been determined in experiments that odours emitted from meat offal as well as odours generated by partial oxidation of these odours can be substantially eliminated in the exhaust gases by introducing such odours into the burner of a Clayton type E-254 steam generator. Previously, it has only been known to remove odours from processing plants by incinerating in smoke tube boilers and heaters. The results of the tests show that in accordance with the present invention the rendering system 1 may be operated in a closed way with substantially all vapours and gasses used by (e.g. ventilating air) or generated by the rendering process (e.g. odour emissions) being either condensed into liquids or solids, e.g. fat or water, or incinerated in the burner of the steam generator.

### 15. GENERAL LAYOUT

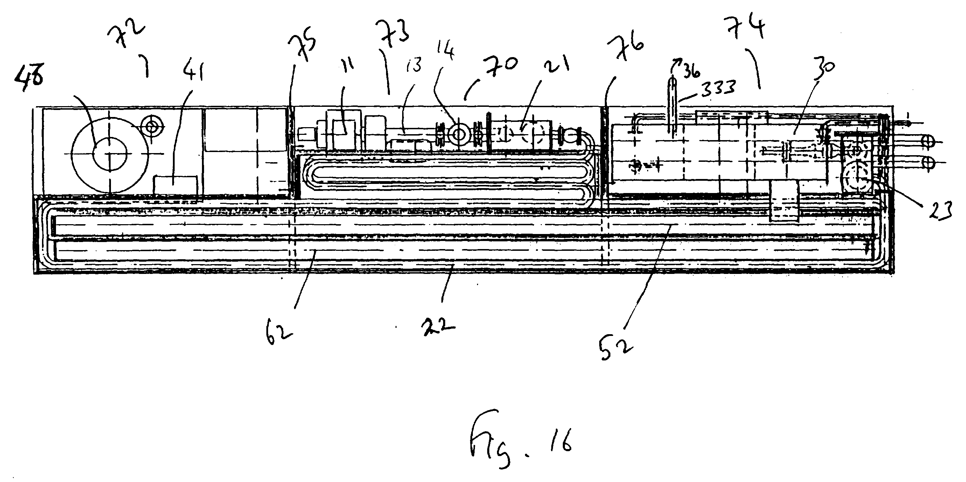

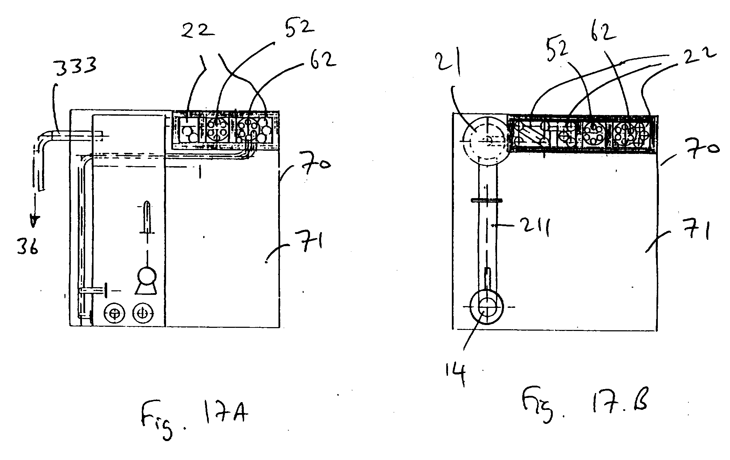

The compact housing for the rendering system 1 in accordance with the present invention will be described with reference to Figs. 15 to 18. Fig. 15 is a cross-sectional side view through the container 70. Fig. 16 is a cross-sectional top view of the container 70. Figs. 17A and 17B are cross-sectional end views in the end (74) and middle compartment (73) respectively. In the compact housing the elements and machines are preferably arranged along a sufficiently spaced corridor 71 which allows regular supervision and maintenance. The housing may be built using various materials and construction systems. One suitable housing is a generally rectangular housing such as an adapted sea-container 70. In the following 40 foot high cube (9ft. 6 inches) containers will be described as an example.

For more important maintenance activities, machines, to which the access via the corridor 71 is difficult, can be accessed via panels which can easily be opened and which are located in a side wall of the container 70. Two cross walls 75, 76 may be located within the container 70 resulting in the installation being compartimentalised into three compartments 72, 73, 74. A first outer compartment 72 groups all system utilities together: steam generator 43, water softener 41, an electricity control panel 77, connections, cooling water 55 if separate, electricity, fuel, waste water 53 and optionally a modem and/or telephone line.

The shredder 12, the feeding pump14 and the steam heater 21 are preferably placed in the middle compartment 73. This compartment 73 is the only unclean zone in the installation. This zone 73 is preferably accessible via a door in the intermediate wall 75 separating it from the burner 432. This allows an optimum ventilation pattern.

The drier 30 and the defatting press 35 are provided in the third outer compartment 74. In this compartment only sterilised products are being processed and it forms a clean zone accessible via a separate outer door. The intermediate wall 76 separating it from the unclean middle compartment 73 contains a sealed door as an emergency exit only.

The three tubular components of the installation, i.e. the holding tube 22, the heat exchanger 62 and the water condenser 52 are arranged over the entire length of the container 70 and next to each other against the ceiling above the corridor 71. These static components do not need frequent supervision. Hence, without impairing mobility in the corridor 71, all other components remain optimally accessible. This compartmentalisation permits an optimally controlled air ventilation pattern with respect to heat removal and preventing odour emission. For this purpose, ventilation openings or devices are provided in the outer wall of the clean zone 74 and in both intermediate walls 75, 76. In this way fresh air flows continuously into the clean zone 74 via a wall ventilating opening or device placed at the bottom of the wall. This air flows upwardly through the clean zone 74 and exits into the unclean zone 73 via a ventilating opening or device placed at the top of the intermediate wall 76 between these two zones 73, 74. The air then flows downwardly through the unclean zone 73 and is sucked out via a ventilating opening or device at the bottom of the intermediate wall 75 separating the unclean zone 73 from the furnace space 72. This ventilating opening or device is connected via a duct to the suction side of the burner ventilator 431.

In this way the internal air is prevented from leaving the installation except via the burner 432. The clean zone 74 is ventilated only with fresh and clean air from outside. The air from the unclean zone 73 is immediately carried away and burned. In the case of additional optional modules these may also be kept free of emissions by connecting their ventilating outlets to the suction side of the ventilator 431 of burner 432.

The rendering system 1 according to the present invention is very compact. One of the major reasons for the proposed configuration is to provide a minimum of possible diffuse odour emissions. Although all machines in which animal offal is being processed are completely closed and sealed, very small diffuse leaks can still lead to small quantities of odorous gasses being released in the inner space of the container 70. This space air is continuously sucked away and burned by the burner 432 of the steam generator 43. The air ventilation provides on the one hand enough under-pressure in the container 70 so that there is always air from outside flowing inside and never the contrary, and on the other hand a large ventilation factor of about 20 air ventilations per hour. The small volume of the container 70, the generally closed system and the air ventilation factor result in the proposed container configuration forming a simple and secure odour treatment system with the highest possible guarantee of an emission free exploitation treatment system with the highest possible guarantee of an emission free exploitation. The system 1 in accordance with the present invention may provide an odour emission level such that the 98 percentile odour contour plot at an odour level of 1 odour unit/m³ lies within a nominal radius of 500 m from the system location, more preferably 100 m. 1 odour unit/m³ represents the level of odour which is detected by 50% of the population. The plot of the 98% percentile odour contour represents the contour of odour emissions which meet the required level (here 1 odour unit/m³) for 98% of the time. The container installation can be put inside as well as outside without affecting the odour treatment.

In accordance with the present invention, a closed rendering system 1 is provided with a throughput of offal or animal waste of more than 10 kg/hour per m³ of processing container volume (excluding storage space for fat, cracklings etc.), preferably greater than 13 kg/hour per cubic meter of processing container volume, more preferably greater than 16 kg/hour per cubic meter and most preferably 20 or more kg/hour per cubic meter of processing container volume.

Another advantage of the container configuration is the fact that the entire installation can be prefabricated and also tested in house under ideal circumstances, thus reducing the costs of construction, transportation, assembly, connection and commissioning to an absolute minimum. The concept also allows eventually to perform major maintenance or overhaul away from the usual operating location, e.g. in an appropriate work place thus minimising the costs and improving the quality thereof.

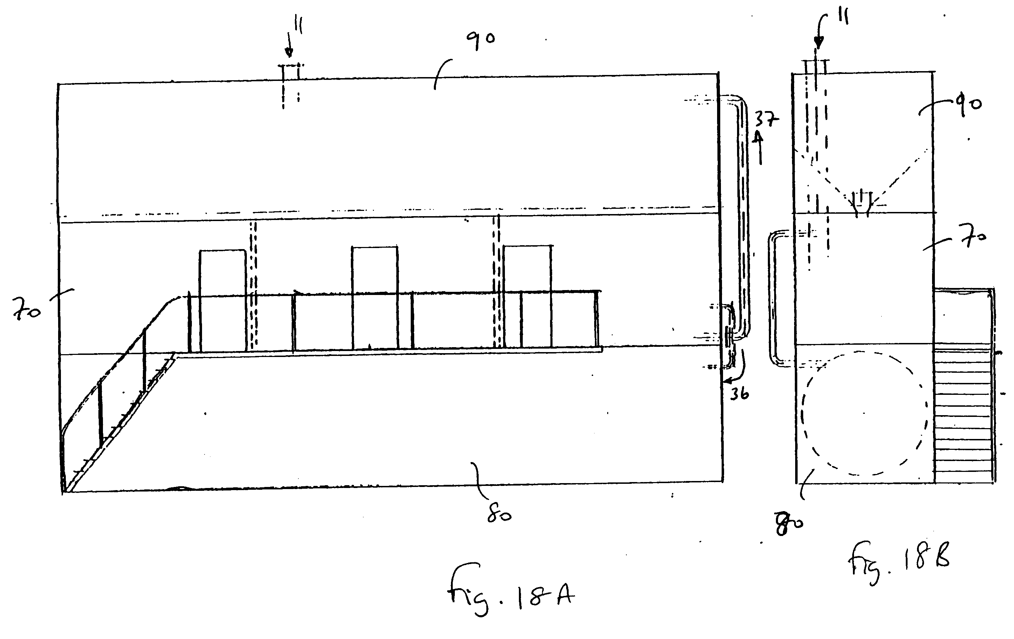

Furthermore, the installation can be looked upon as a basic module around which optional modules can be provided in a very simple way. A modular installation of three 40 feet sea container placed on top of each other is possible as shown in Figs. 18 A and B with the lower container 80 as fat storage tank for storing the production fat 36, the middle container 70 being the processing container and the upper container 90 being the storage place for defatted solids 37. Fig. 18A is a side view and Fig. 18B is an end view

The above mentioned modular configuration allows the production fat 36 to flow under gravity to the storage tank 80. In a part preceding this fat storage an extra clarifying section can be provided for achieving a maximum fat clarification. A pump can be provided to pump the fat 36 from the storage tank 80 to another tank (e.g. transport tank) and also feed the sediment from the clarifying zone back to the installation at regular time intervals. This fat tank 80 may also be provided with an built-in steam pipe which is fed from the steam generator 43 thus heating the stored fat 36 at appropriate times.

The cake storage silo 90 is preferably put on top of the installation. The defatting press 35 of the installation can "pump" the defatted cake 37 directly to this storage. If desired, a small mill for grinding the cake can be built onto the cake silo 90, whereby a distribution screw is preferably for uniform filling of the silo. The silo 90 preferably has an inclined floor with a horizontal transport screw over the entire length, so that the bulk meal 37 can be loaded directly onto a truck. By placing a rotating or chain elevator at one of both upper front parts of the silo 90, in combination with a distribution screw, an efficient meal circulation and homogenisation can be achieved. In the example considered the above mentioned mill can be built in a 20 feet sea container which can be placed as a prefabricated unit on top of the meal silo. In case air canons are used for the supply of raw material to the installation, the, feed mechanism 5 with integrated screen screw 6 for the separation of water can also be built in a 20 feet sea container and placed sideways of the installation.

## Claims

1. A method for the continuous in-line expansion of a heterogeneous substance including a fluid and a solid fraction, comprising the steps of:
inputting the substance under pressure into a filtration cage,
releasing the liquid fraction which is filtered through the cage,
releasing the solid fraction from the cage,
controlling the pressures of the liquid fraction and the solid fraction so that the pressure at which the liquid fraction is released is lower than the pressure at which the solid fraction is released.

2. A method according to claim 1, further comprising the step of heating the substance before the expansion step.

3. A method according to claim 2, wherein the heating step includes sterilisation.

4. A method according to any previous claim, further comprising the step of separating the liquid fraction into an aqueous component and another liquid component.

5. A method according to claim 5, wherein said separation step is by gravimetric separation.

6. A method according to any previous claim, wherein the method includes rendering of natural products.

7. A combined expansion, pressure regulation and filtration apparatus for continuous in-line expansion of a heterogeneous substance including a fluid and a solid fraction.

8. An apparatus according to claim 7, further comprising:
a filtration cage for filtering said fluid from said solid fraction,
a housing which encompasses said filtration cage for receiving said liquid fraction and for outputting said liquid fraction,
first pressure controlling means for controlling the pressure at which said liquid fraction is output from said housing, and
second pressure controlling means for controlling the pressure at which the solid fraction leaves the cage.

9. An apparatus according to claim 8,wherein the second pressure controlling means is set at a higher opening pressure than said first pressure controlling means.

10. An apparatus according to claim 8 or 9, wherein said first and/or said second pressure controlling means are knife valves.

11. An apparatus according to any of claims 7 to 10, wherein said apparatus is connected to a separator for separation of said liquid fraction into an aqueous portion and another liquid component.

12. An apparatus according to claim 11, wherein said separator is a gravimetric separator.

13. A sterilisation unit for continuous in-line sterilisation of a heterogeneous substance including a fluid and a solid fraction comprising:
a means for raising the pressure within the unit,
means for heating the substance, and
said unit is terminated by a combined expansion, pressure regulation and filtration apparatus according to any of the claims 7 to 12.

14. An apparatus in accordance with claims 7 to 12 or a unit in accordance with claim 13, wherein said apparatus or said unit is included within a rendering system.
